# EUROPEAN PATENT SPECIFICATION

(11) **EP 0 686 654 B1**
(45) Date of publication and mention of the grant of the patent: **01.10.2003**
(21) Application number: 95107978.9
(22) Date of filing: 26.05.1995
(51) Int. Cl.: C08G 18/32, C08G 18/79, C09D 17/00, C09D 7/02, C07C 251/16

(54) **Coating compositions comprising aldimine and iscyanate and process for their preparation**
Aldimin und Isocyanat enthaltende Beschichtungszusammensetzungen sowie Verfahren zu deren Herstellung
Compositions de revêtement comprenant de l'aldimine et de l'isocyanate et procédé de leur préparation

(30) Priority: 06.06.1994 US 254211
(43) Date of publication of application: 13.12.1995
(73) Proprietor: BASF CORPORATION, Mount Olive, New Jersey 07828-1234 (US)
(72) Inventor: Braun, David W., Toledo, Ohio 43614 (US); Colyer, Emmerson Keith, Waterville, Ohio 43566 (US); Dantiki, Sudhakar, Toledo, Ohio 43617 (US); Tye, Anthony J., Waterville, Ohio 43566 (US); Shah, Rajnikant P., Holland, Ohio 43528 (US); Mormile, Patrick J., Bowling Green, Ohio 43402 (US); Richards, Bradley M., Maumee, Ohio 43537 (US); Koevenig, Brian P., Lambertville, Michigan 48144 (US); Laginess, Thomas J., Lambertville, Michigan 48144 (US); Stateczny, Henry J., Whitehouse, Ohio 43571 (US)
(74) Representative: Münch, Volker, Dr.

(56) References cited:
- EP-A- 0 469 751
- EP-A- 0 531 249
- US-A- 3 420 800
- US-A- 3 530 184

## Description

### BACKGROUND OF THE INVENTION

### 1. Field of the Invention

The present invention relates to new coating compositions based on aldimines and isocyanates. The invention also teaches the dispersion of pigments in aldimines and its utility in coatings. It also relates to a method for processing dispersions of pigments in aldimines to achieve improved coating properties. It further relates to coating compositions containing novel aldimines.

### 2. Description of the Prior Art

Polyurethane coatings prepared from the reaction of isocyanate functional resins with hydroxyl functional polyol resins is well known in the art. These coatings are known for a number of outstanding properties including high durability and chemical resistance. Their high glamour properties make them particularly suitable for automotive and industrial applications. With these coatings however, the polyol component contributes the majority of the bulk viscosity of the coating due to hydrogen bonding and the molecular weight of the polymeric backbone, restricting the freedom of the formulator to incorporate other materials and meet application solids specifications. Decreasing the molecular weight of the polyol eventually leads to slow network building unless there is significant energy input.

The properties of higher solids polyol containing polyurethane coatings can be improved by using reactive diluents. The best use of this technology has been demonstrated by U.S. Patent No. 5,214,086 Mormile et al. (assigned to BASF Corp.). In it are disclosed the uses of dialdimines, diketimines and hindered diamines to modify polyol compositions, resulting in a reduction of the overall reaction viscosities of the mixtures while maintaining and most often improving on the network building and overall physical properties. In these compositions, there is a reduced but still present contribution to viscosity from the polyol.

Efforts to further decrease viscosities of polyurethane coatings by totally replacing hydroxyl bearing resins has led to work in several areas. One area of activity has been with acetoacetate bearing resins. The acetoacetate group does lend itself to lower viscosities due to reduced hydrogen bonding, but reaction with isocyanates is sluggish and some hydroxyl functionality is usually required. Another area of activity has focused on active hydrogen, amino compounds. One class of these compounds are primary and secondary amines. Because of their high reactivity with isocyanates, primary and most secondary amine compounds are not useful in applications such as automotive refinish and general industrial where the components are routinely mixed in bulk prior to film application. Additionally, ambient temperature cure is predominantly used and force cure temperatures seldom exceed 75° C. when employed. This precludes the use of heat activated, blocked isocyanates. Secondary amines have longer usable times than primary amines, but still have short pot times in relationship to set times. Advancements have been made to reduce the reactivity of secondary amines. The best example of this is described in U.S. Patent No. 5,243,012 whereby hindering groups on the amine and incorporation of organotin compounds are used. These compositions, though fine for final properties, do not have the pot time/set time relationship one is accustomed to in the automotive refinish and general industrial field.

Another class of active hydrogen, amino compounds are masked primary amines such as aldimines, ketimines and oxazolidines. Oxazolidines have limited utility as sole reaction partners with isocyanates because of generally slow setting film properties. Ketimines, as sole reaction partners with isocyanates, have a relatively good pot time/set time relationship. Aldimines are of great interest as reaction partners with isocyanates because they can be made to posses low viscosity and color, they give high yields with isocyanates in non-volatile stoving tests and they can have a very good pot time/set time relationship. However, unlike the other aforementioned compounds, many aldimine compounds have the drawback of possessing limited compatibility with traditional aliphatic polyisocyanates such as biurets and isocyanurates. It has been well established in the moisture cure coatings field that isocyanate functional polyurethane prepolymers can be formulated to be compatible with aldimine compounds. U.S. Patents 4,469,831 Bueltjer et al., 4,720,535 Schleier et al., and 4,853,454 Merger et al. (all assigned to BASF AG), all describe compositions of aldimine functional resins and isocyanate functional prepolymers where the rate of reaction can optionally be accelerated by incorporation of acid catalysts. However, the prepolymer now is a major contributor to viscosity and again formulation latitude is restricted.

It has now surprisingly been found, in combinations of aldimines and isocyanates where the isocyanate is composed of uretdione diisocyanates, that compatible mixtures of very low viscosity are formed permitting the coatings formulator full latitude in other compounds he may use. Furthermore, even more surprising, ambient-cured coatings made from aldimines with functionalities as low as two and uretdione diisocyanate containing isocyanate combinations are very fast for property development on application and provide for very long pot times.

U.S. Patent No. 5,098,983 describes polyisocyanate mixtures having (cyclo)aliphatically bound isocyanate groups, (cyclo)aliphatically bound uretdione groups and chemically incorporated carboxyl groups, processes for the production of these isocyanates and their use, optionally after at least partial neutralization with tertiary amines, as binders for coating compositions which maybe crosslinked under the effect of moisture and/or heat and as reactants for compounds containing isocyanate and/or carboxyl reactive groups in the production of high molecular weight plastics. The utility of aldimines as reaction partners with the uretdione structure is not revealed.

U.S. Patent No. 4,522,975 describes NCO-terminated uretdione group-containing polyurethane prepolymers prepared by reacting a uretdione group containing organic polyisocyanate with an isocyanate reactive hydrogen atom-containing compound, employing a select equivalent ratio of NCO to OH ranging from about 1.5/1 to about 2/1. The polyurethane prepolymers are useful in the preparation of lignocellulosic composite materials, such as particle board, and in making coatings. The utility of aldimines as reaction partners with the uretdione structure is not revealed.

It has also surprisingly been found a method for processing dispersions of pigments in aldimines to achieve improved coating properties. U.S. Patents 4,720,535, 4,469,831 refers to non-hydroxyl containing coating compositions which includes aldimine or polyaldimine. U.S. Patent No. 5,214,086 describes coating compositions comprising at least one hydroxy functional resin, at least one isocyanate functional resin and a aldimine or ketimine.

U.S. Patent No. 5,288,804 describes acetoacetate aromatic aldimine resin compositions. U.S. Patent No. 5,288,802 describes an automotive refinish primer surfacer containing acetoacetate functional polyesterpolyol, a polyacrylate, and an amine functional epoxy resin.

Compositions that include polyisocyanates and aldimines, wherein the aldimines are admixed with pigments additives and molecular sieves are known from EP 0 671 422, which has been published after the priority date of the instant invention.

From EP 0 531 249 compositions containing hydroxyl functional resins, isocyanate compounds and aldimines are known, wherein the single compounds of the compositions are all mixed in one step.

None of these patents, however, teaches or illustrates the dispersion of pigments in aldimines.

The process can yield low viscosity dispersions containing little or no organic solvent. These dispersions allow for higher solids coatings than other film forming dispersion vehicles and again permit the formulator full latitude in other compounds he may use according to this invention.

### SUMMARY OF THE INVENTION

The present invention relates to a coating composition containing no hydroxyl functional resins and comprising:
a) an aldimine having the structure 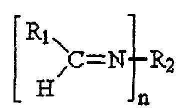 wherein
   n averages greater than 1,
   R₁ is alkyl, aryl, cycloaliphatic or substituted alkyl, aryl, cycloaliphatic or heterocydic group, and
   R₂ is monomeric or polymeric aliphatic, aromatic, arylaliphatic or cycloaliphatic group which may contain O, N, S or Si,
b) an isocyanate functional component,
c) at least one pigment, filler or extender and
d) a secondary amine functional reactive diluent
wherein the pigment(s), filler(s) or extender(s) are predispersed in the aldimine compound and optionally other co-dispersing vehicles or optionally pigment wetting agents or optionally solvents are used.

The present invention also relates to a coating composition containing no hydroxy functional resins and comprising:
a) a dispersed pigment concentrate composition comprising:
   a) an aldimine having the structure 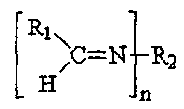 wherein n averages greater than 1,
      R₁ is alkyl, aryl, cycloaliphatic or substituted alkyl, aryl, cycloaliphatic or heterocyclic group, and
      R₂ is monomeric or polymeric aliphatic, aromatic, arylaliphatic or cycloaliphatic group which may contain O, N, S, or Si,
   b) at least one pigment, filler or extender
      wherein the pigment(s), filler(s) or extender(s) are predispersed in the aldimine compound and optionally other co-dispersing vehicles or optionally wetting agents or optionally solvents are used
b) a non-reactive film forming let down resin.

The present invention also relates to a process for preparing pigment, filler or extender containing aldimine and isocyanate compositions wherein the pigment, filler or extender is predispersed in the presence of the aldimine and optionally with other co-dispersing vehicles and optionally with pigment wetting agents and optionally with solvent. The process includes a method for regulating moisture content in the system allowing more flexibility in formulation to produce coatings with improved properties.

The coating compositions of the present invention can be ambient cured or baked to cure. The coatings are especially useful as automotive refinish and industrial paint compositions. The compositions can contain well known paint additives such as catalysts, flow and wetting agents, mar and slip agents, anti-settling and anti-sag agents.

The coating compositions can be of low volatile organic content (VOC), and in fact zero VOC, but the invention is not limited to only low VOC compositions. A range of VOC's can be obtained in part by the choice of the aldimine and the isocyanate components and also by the choice of co-reactants.

The invention also relates to the utility of the compatibility of the uretdione isocyanates toward the aldimine compounds, which not only makes them mutually suitable co-reactants, but also by co-blending with the uretdione, aids in the compatibilizing of other isocyanate functional resins which are not normally in themselves compatible with the aldimine compounds.

The invention also describes the surprisingly fast set time and property development of the coating compositions comprising an aldimine and uretdione isocyanate. The behavior described in the invention is indicative of the uretdione structure apparently entering into and supporting the reactive matrix.

This invention also relates to improving the compatibility characteristics of aldimine compounds in the presence of isocyanate compounds by proper selection of the amines and aldehydes used to formulate the aldimine compound.

This invention also relates to optionally using catalysts to accelerate the reaction rate of the aldimine functional compounds and isocyanate functional compounds. The catalysts used according to this invention are aromatic or aliphatic carboxylic acids or arylsulfonic acids.

In addition to acid catalysis, this invention also relates to optionally using compounds such as organotin compounds to further regulate the reaction of the described compositions.

This invention also describes a method in which the aldimine compound is used as the pigment dispersant in isocyanate cured coatings. The resultant dispersions have surprisingly lower viscosity and good anti-settling characteristics and optionally can be made solvent-free.

The invention also relates to the reaction behavior of the coating compositions being moisture-tempered.

### DETAILED DESCRIPTION OF THE INVENTION

The present invention relates to a coating composition containing no hydroxyl functional resins and comprising:
a) an aldimine having the structure 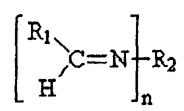 wherein
   n averages greater than 1,
   R₁ is alkyl, aryl, cycloaliphatic or substituted alkyl, aryl, cycloaliphatic or heterocyclic group, and
   R₂ is monomeric or polymeric aliphatic, aromatic, arylaliphatic or cycloaliphatic group which may contain O, N, S or Si,
b) an isocyanate functional component,
c) at least one pigment, filler or extender and
d) a secondary amine functional reactive diluent
wherein the pigment(s), filler(s) or extender(s) are predispersed in the aldimine compound and optionally other co-dispersing vehicles or optionally pigment wetting agents or optionally solvents are used.

The resultant dispersions have surprisingly low viscosity and good anti-settling characteristics and optionally can be made solvent-free.

Difunctional aldimines of the invention are obtained from the reaction between a diamine and one or more types of aldehyde. Examples of aliphatic diamines include, but are not limited to: Ethylene Diamine, Ethylene Glycol Diamine, Propylene Glycol Diamine, Hexamethylene Diamine, 1,3-Diaminopentane, 2-Methyl-1,5-Diaminopentane, 1,8-Diaminooctane and 1,10-Diaminodecane. According to this invention, 1,3-Diaminopentane, Hexamethylene Diamine, 2-Methyl-1,5-Diaminopentane are preferred. Examples of cycloaliphatic diamines include, but are not limited to compounds having the following structures: 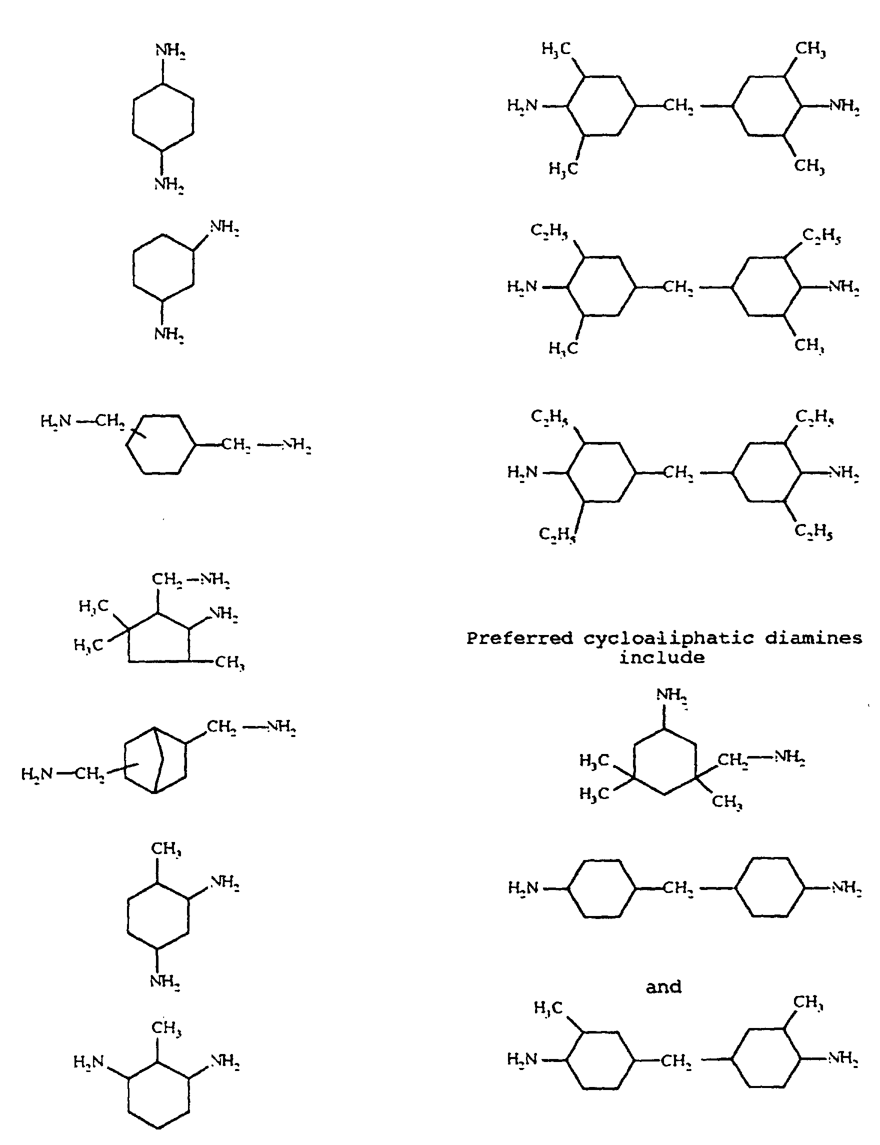 Trifunctional aldimines of the invention are obtained from the reaction between a tri-primary-amine and one or more types of aldehyde. Examples of preferred triamines are 4-methylamino-1,8-diaminooctane and the polyoxyalkylamines available from Texaco Chemicals under the trademark Jeffamine® T- series.

It follows that a polyfunctional aldimine can be prepared from a polyfunctional primary amine.

Polymeric aldimines of the invention are obtained from the reaction product of a polymer with pendant primary amine functional groups and an equivalence of an aldehyde. A variety of synthetic strategies can be employed to prepare these primary amine functional polymers, for example, an N-vinyl formamide copolymer to which the formamide groups are subsequently hydrolyzed to yield the free primary amine. Alternately, aldimine functional groups can be grafted directly onto a reactive group on a polymer chain or other multifunctional molecule by iminating a primary amine which has an additional reactive group that is complementary to a reactive group on the polymer chain and is unaffected by the Schiff base formation.

Aldehydes suitable for use in accordance with the invention include, but are not limited to those preferably containing 1 to 8 carbons such as propionaldehyde, butyraldehyde, pivalaldehyde, isobutyraldehyde, 2-methylbutanal, heptaldehyde, 2-ethylbutyraldehyde, valeraldehyde, isovaleraldehyde, hexaldehyde, octyl aldehyde, methoxyacetaldehyde, methyl ester of 2-methyl-3-oxopropanoic acid, methyl ester of 2,2-dimethyl-3-oxopropanoic acid, benzaldehyde, anisaldehyde, 2-methylbenzaldehyde, nicotinaldehyde and cyclohexanecarboxaldehyde. Other aldehydes such as 4-t-butyl benzaldehyde, 4-ethoxy benzaldehyde, 3-methyl-p-anisaldehyde, 4-ethylbenzaldehyde, cyclopropanecarboxaldehyde, 9-ehtyl -3-carbazolecarboxaldehyde, diphenylacetaldehyde, 10-methylanthracene-9-carboxaldehyde and pyrenecarboxaldehyde may also be suitable.

This invention also relates to improving the compatibility characteristics of aldimine compounds in the presence of isocyanate compounds by proper selection of the amines and aldehydes used to formulate the aldimine compound.

The present invention also relates to a process for preparing pigment, filler or extender containing aldimine and isocyanate compositions wherein the pigment, filler or extender is predispersed in the presence of the aldimine and optionally with other co-dispersing vehicles and optionally with pigment wetting agents and optionally with solvent. The process includes a method for regulating moisture content in the system allowing more flexibility in formulation to produce coatings with improved properties.

In isocyanate cured systems, it was found that aldimines gave better pot life and higher yields in non-volatile stoving tests than did ketimines. This indicates that aldimines are less susceptible to hydrolysis than ketimines, since the hydrolysis products are highly reactive primary amines and volatile ketone or aldehyde. This makes aldimines relatively better grinding vehicles for dispersing pigments which normally contain moisture.

It is known that in the presence of moisture the imine/isocyanate reaction is favored. It is known in the art to use additives such as oxazolidines, to remove moisture from systems. According to the process of this invention, proper levels of moisture scavenger can be used to keep the desired amount of moisture in the dispersion to aid in achieving a proper balance of pot life and cure of the coating film. Additionally, acid can be used to catalyze the reaction as needed and organotin compounds can be used to extend the pot life as desired. By using this process, coatings with improved properties can be produced.

The ability to use the aldimine as a grinding vehicle provides a truly flexible, multi-purpose concentrate for isocyanate cured coatings, allowing for a range of VOC depending on the selection of the let-down resin. The use of the aldimine compound as the dispersant to make zero or near-zero VOC dispersions allows for the lowest potential VOC with any given compatible film-forming let-down resin for use with isocyanate crosslinked coatings.

Equipment suitable for dispersing the compositions of this invention are those known to the art such as high speed dissolvers, ball mills, sand mills, and horizontal mills.

Useful isocyanates of the isocyanate functional component are di- or polyisocyanates which are aliphatic, cycloaliphatic or aromatic. Such isocyanates include hexamethylene diisocyanate, 1-methyl-2,4-diisocyanato-cyclohexane, isophorone diisocyanate, 4, 4'-diisocyanatodicyclohexyl methane, toluene-2,4-diisocyanate, o-m- and p-xylene diisocyanate, 1,5-naphthalene diisocyanate, masked isocyanates, or mixtures thereof. It is also possible to use polyisocyanates with isocyanurate, allophanate, uretdione or oxadiazenetrione structures. The polyisocyanates may optionally be reacted with a deficit of polyhydroxy compounds, such as water, glycols, polyalkylene glycols, neopentyl glycols, glycerol, trimethylol propane, hexane triol or alkyd resins, before being used.

The other active hydrogen compounds of the invention wherein the pigments are dispersed in the aldimine compound may include non-hydroxyl functional, isocyanate reactive resins possessing at least one active hydrogen, thereby allowing them to become crosslinked into the coating matrix.

Useful pigments according to this invention are various types common to the art which include but are not limited to titanium dioxide, graphite, carbon black, zinc oxide, cadmium sulfide, chromium oxide, zinc sulfide, zinc chromate, strontium chromate, barium chromate, lead chromate lead cyanamide, lead silico chromate, chromium oxide, zinc sulfide, yellow nickel titanium, yellow chromium titanium, red iron oxide, oxide, yellow iron oxides, black iron oxide, naphthol reds and browns, anthraquinones, dioxa zine violet, isoindoline yellows, arylide yellow and oranges, ultramarine blue, phthalocyanine complexes, amaranth, quinacridones, halogenated thioindigo pigments, extender pigments such as magnesium silicate, aluminum silicate, calcium silicate, calcium carbonate, fumed silica, barium sulfate, zinc phosphate.

Organic solvents common to the art may be used. Suitable solvents include aromatics like toluene and xylene, esters like alkylacetates of C₁ to C₂₀ alcohols, alcohols such as n-butanol, ketones like 2-butanone and methyl isobutyl ketone.

This invention also relates to optionally using catalysts to accelerate the reaction rate of the aldimine functional compounds and isocyanate functional compounds. The catalysts used according to this invention are aromatic or aliphatic carboxylic acids or arylsulfonic acids. Acids which are useful are formic acid, mono-, di-, and trichloroacetic acid, oxalic acid, malonic acid, maleic acid, fumaric acid, heptanoic acid, pelargonic acid, isononanoic acid, benzoic acid, 4-hydroxybenzoic acid, mono-, di- and trichlorobenzoic acid and salicylic acid. Preferred acids are benzoic acid and heptanoic acid.

This invention also relates to optionally using organotin compounds to regulate the reaction of the compositions of the invention. Useful organotin compounds include dibutyltin mercaptide, dibutyltin diacetate, dibutyltin sulfide and dibutyltin bis-mercaptide. Most preferred according to the present invention is dibutyltin dilaurate.

The invention also relates to the behavior of the coating compositions being moisture-tempered.

Coating compositions described by the present invention find utility in applications of ambient film forming and curing such as automotive refinish and industrial coatings. It is also suggested that the present invention applies to coatings to be force dried or baked. Forced dry conditions range from 100 degrees Fahrenheit to 190 degrees Fahrenheit. Baking conditions common to the art may range from 175 degrees Fahrenheit to over 375 degrees Fahrenheit. The coating cure process for the present invention may also be accelerated by the utilization of radiant heating or Infra Red emitting devices known to the art.

Coating compositions described by the present invention find utility as clearcoats, basecoats, topcoats and undercoats.

The present invention relates to a coated substrate prepared by coating a substrate with a coating of the present invention. Any substrate material can be coated with the coating composition according to the present invention. These substrate materials include such things as glass, ceramics, paper, wood, and plastic. The coating system of the present invention is particularly adapted for metal substrates, and specifically as an automotive re-finish system. The substrate may be uncoated material or can be primed. The substrate may also be coated with paint products applied at the time of manufacture or just prior to application of the compositions of the present invention. The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Exemplary metal substrates include such things as steel, aluminum, copper, zinc, magnesium and alloys thereof.

The following example is intended to illustrate the invention.

All quantities are shown on a weight basis unless otherwise indicated. All non-volatile tests are according to ASTM D-3960-90, all weight/gallon determinations are according to ASTM D-1475-90. All VOC determinations include the use of the above test methods.

### Example 1

ALDIMINE is the reaction product of one mole of Isophorone Diamine with two moles of Isobutyraldehyde.

SECONDARY AMINE is the reaction product of one mole of 4,4'-Methylenebis (2-Methyl) Cyclohexanamine with 2 moles of diethyl maleate.

ISOCYANATE 1 Hexamethylene Diisocyanate Biuret.

ISOCYANATE 2 An approximately 2 to 1 molar ratio mixture of Hexamethylene Diisocyanate Uretdione and Hexamethylene Diisocyanate Isocyanurate.

PIGMENT WETTING AGENT is a solution of a salt of unsaturated polyamine amides and high molecular weight acidic esters that is electroneutral. An example of a product of this type is Anti-Terra® U (BYK-Chemie USA, Wallingford, CT).

ANTISETTLING AGENT is an organic rheological additive of a proprietary composition. An example of a product of this type is M-P-A® 1078X (Rheox, Hightstown, NJ). invention.

The 2.1 VOC undercoat composition was formulated by blending the following constituents as indicated.

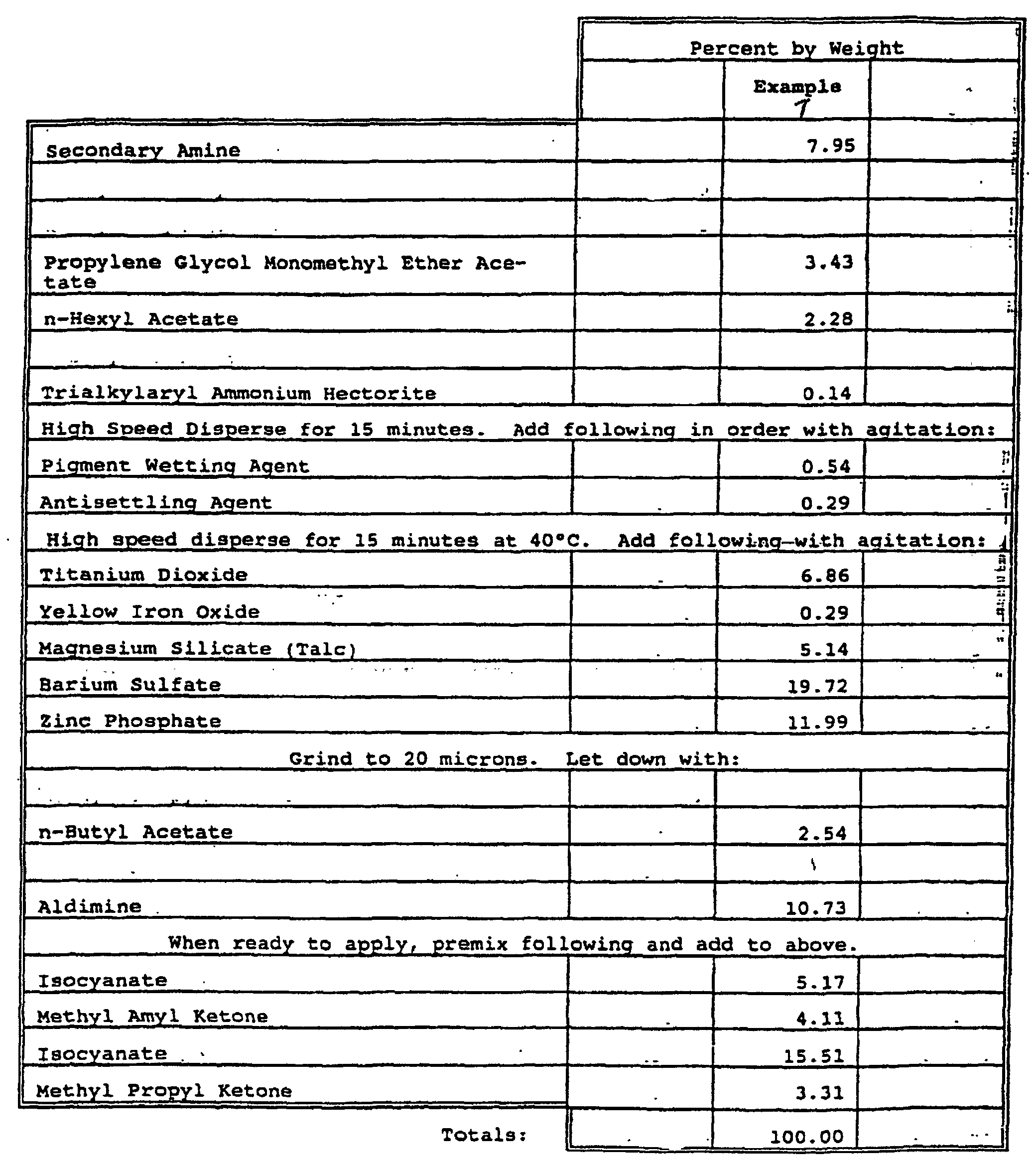

The coating was prepared by first combining the first four ingredients in a suitable vessel with agitation. This mixture was then high speed dispersed with a Cowles blade for 15 minutes. The next two ingredients were then added in order and high speed dispersed for 15 minutes at a temperature of 40°C. The remaining pigments were then added with high speed dispersion. Agitation continued for 15 minutes, then the mixture was ground to 20 microns with 1.1 mm zirconium shot in a high density polyethylene shaker mill. The mill was drained, and the next two ingredients were added with agitation to create the primer base component.

To prepare the primer for application, the last four ingredients were blended together, then added to the primer base component and blended immediately prior to application.

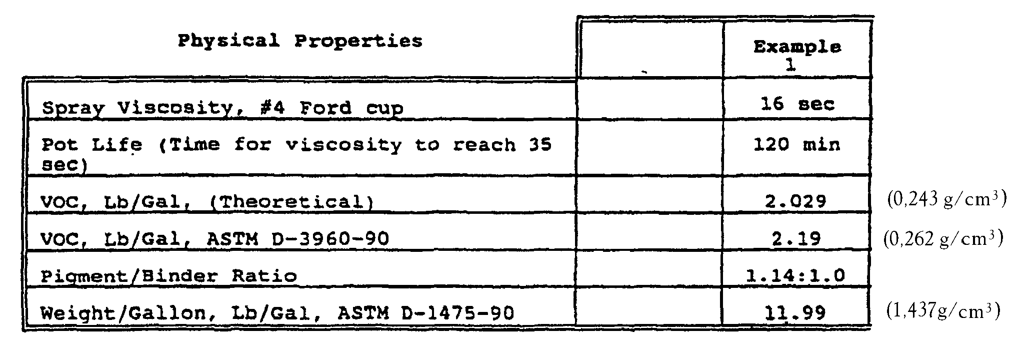

The resulting primer was sprayed and cured at ambient conditions (25°C, 55% RH). The system sanded well and possessed a proper level of desired properties expected of primer-surfacers. As illlustrated, the use of aldimine ensures consistency of theoretical versus determined VOC results, while maintaining sufficient properties.

## Claims

1. A coating composition containing no hydroxyl functional resins and comprising:
a) an aldimine having the structure 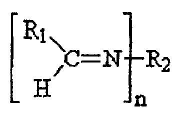 wherein
n averages greater than 1,
R₁ is alkyl, aryl, Cycloaliphatic or substituted alkyl, aryl, cycloaliphatic or heterocyclic group, and
R₂ is monomeric or polymeric aliphatic, aromatic, arylaliphatic or cycloaliphatic group which may contain O, N, S or Si,
b) an isocyanate functional component,
c) at least one pigment, filler or extender and
d) a secondary amine functional reactive diluent
wherein the pigment(s), filler(s) or extender(s) are predispersed in the aldimine compound and optionally other co-dispersing vehicles or optionally pigment wetting agents or optionally solvents are used.

2. The coating composition of claim 1, wherein the isocyanate functional component comprises a group chosen from aliphatic, aromatic, or cycloaliphatic isocyanurates, biurets, oxadiazenetriones or isocyanate functional prepolymers.

3. The coating composition of claim 1, wherein the isocyanate functional component comprises aliphatic, aromatic, or cycloaliphatic uretdione.

4. The coating composition of claim 1, wherein the isocyanate functional component comprises aliphatic, aromatic, or cycloaliphatic allophanate.

5. The coating composition of claim 1, wherein said composition is cured to produce an undercoat.

6. The coating composition of claim 1, wherein said composition is cured to produce a topcoat.

7. The coating composition of claim 1, wherein said composition is cured to produce a basecoat.

8. A coated substrate prepared by coating a substrate with the coating composition of claim 1 and curing said coating.

9. The coating composition of claim 1 wherein the volatile organic content (VOC) is less than 335.5 kg/m³ (2.8 pounds per gallon)

10. The coating composition of claim 1 wherein the volatile organic content (VOC) is less than 263.3 kg/m³ (2.2 pounds per gallon)

11. The coating composition of claim 1 wherein the volatile organic content (VOC) is less than 119.8 kg/m³ (1.0 pounds per gallon)

12. A process for preparing pigment, filler or extender containing aldimine and isocyanate compositions, wherein the pigment(s), filler(s) or extender(s) are predispersed in an aldimine having the structure 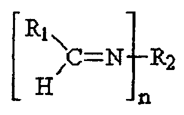 wherein
n averages greater than 1
R₁ is alkyl, aryl, cycloaliphatic or substituted alkyl, aryl, cycloaliphatic or heterocyclic group, and
R₂ is monomeric or polymeric aliphatic, aromatic, arylaliphatic or cycloaliphatic group which may contain O, N, S or Si,
and optionally other co-dispersing vehicles or optionally pigment dispersing agents or optionally solvents are used, with the proviso that the composition contains no hydroxyl functional resin and a secondary amine functional reactive diluent.

13. A method according to the process of claim 12, wherein the desired amount of moisture in the dispersion is retained and optionally acid and organotin compounds are used to produce coating properties in isocyanate cured system.

14. An aldimine having the structure 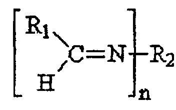 wherein
n is 2
R₁ is benzyl R₂ is

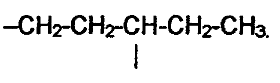

15. An aldimine having the structure 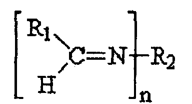 wherein
n is 3
R₁ is a mixture of aromatic and aliphatic groups
R₂ is aliphatic.

16. The aldimine of claim 15, where R₁ is a mixture of benzyl and isobutyl groups and R₂ is:

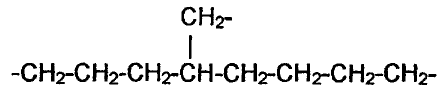

17. A coating composition containing no hydroxy functional resins and comprising:
a) a dispersed pigment concentrate composition comprising:
a) an aldimine having the structure 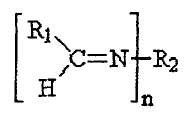 wherein n averages greater than 1,
R₁ is alkyl, aryl, cycloaliphatic or substituted alkyl, aryf, cycloaliphatic or heterocyclic group, and
R₂ is monomeric or polymeric aliphatic, aromatic, arylaliphatic or cycloaliphatic group which may contain O, N, S, or Si,
b) at least one pigment, filler or extender
wherein the pigment(s), filler(s) or extender(s) are predispersed in the aldimine compound and optionally other co-dispersing vehicles or optionally wetting agents or optionally solvents are used
b) a non-reactive film forming let down resin.

18. The coating composition of claim 17 wherein b) is lacquer or polyes-ter/celluloseacetobutyrate (CAB).

19. A coating composition containing no hydroxyl functional resins and comprising:
a) a dispersed pigment concentrate composition comprising:
a) an aldimine having the structure 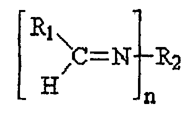 wherein n averages greater than 1,
R₁ is alkyl, aryl, cycloaliphatic or substituted alkyl, aryl, cycloaliphatic or heterocyclic group, and
R₂ is monomeric or polymeric aliphatic, aromatic, arylaliphatic or cycloaliphatic group which may contain O, N, S, or Si,
b) at least one pigment, filler or extender
wherein the pigment(s), filler(s) or extender(s) are predispersed in the aldimine compound and optionally other co-dispersing vehicles or optionally wetting agents or optionally solvents are used
b) a non aldimine-reactive let down resin,
c) optionally, a co-reacting hardener component

20. The coating composition of daim 19, wherein b) comprises imine, amine, hydroxyl, carboxylic acid, anhydride, carbodiimide, epoxy, alkyd enamel, acrylic enamel or blocked isocyanate functional resins.

21. The coating composition of claim 19 wherein b) comprises epoxy, carboxylic acid, anhydride, carbodiimide, amine, hydroxyl or blocked isocyanate functional resins.

## Patentansprüche

1. Beschichtungszusammensetzung, die keine hydroxylfunktionellen Harze enthält und
a) ein Aldimin mit der Struktur 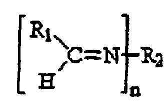 worin
n im Durchschnitt größer 1 ist,
R₁ für eine Alkylgruppe, eine Arylgruppe, eine cycloaliphatische Gruppe oder eine substituierte Alkylgruppe, Arylgruppe, cycloaliphatische Gruppe oder heterocyclische Gruppe steht und
R₂ für eine monomere oder polymere aliphatische, aromatische, arylaliphatische oder cycloaliphatische Gruppe, die O, N, S oder Si enthalten kann, steht,
b) eine isocyanatfunktionelle Komponente,
c) mindestens ein Pigment, mindestens einen Füllstoff oder mindestens ein Streckmittel und
d) ein sek.-aminfunktionelles reaktives Verdünnungsmittel
enthält, wobei das Pigment bzw. die Pigmente, der Füllstoff bzw. die Füllstoffe oder das Streckmittel bzw. die Streckmittel in der Aldiminverbindung vordispergiert sind und gegebenenfalls andere codispergierende Bindemittel oder gegebenenfalls Pigmentnetzmittel oder gegebenenfalls Lösungsmittel verwendet werden.

2. Beschichtungszusammensetzung nach Anspruch 1, worin die isocyanatfunktionelle Komponente eine unter aliphatischen, aromatischen oder cycloaliphatischen Isocyanuraten, Biureten, Oxadiazentrionen oder isocyanatfunktionellen Prepolymeren ausgewählte Gruppe enthält.

3. Beschichtungszusammensetzung nach Anspruch 1, worin die isocyanatfunktionelle Komponente zumindest teilweise aus aliphatischem, aromatischem oder cycloaliphatischem Uretdion besteht.

4. Beschichtungszusammensetzung nach Anspruch 1, worin die isocyanatfunktionelle Komponente zumindest teilweise aus aliphatischem, aromatischem oder cycloaliphatischem Allophanat besteht.

5. Beschichtungszusammensetzung nach Anspruch 1, die zu einem Unterlack gehärtet wird.

6. Beschichtungszusammensetzung nach Anspruch 1, die zu einem Decklack gehärtet wird.

7. Beschichtungszusammensetzung nach Anspruch 1, die zu einem Basislack gehärtet wird.

8. Beschichtetes Substrat, hergestellt durch Beschichten eines Substrats mit der Beschichtungszusammensetzung nach Anspruch 1 und Härten der Beschichtung.

9. Beschichtungszusammensetzung nach Anspruch 1 mit einem Gehalt an leichtflüchtigen organischen Verbindungen (VOC) von weniger als 335,5 kg/m³ (2,8 Pounds pro Gallone).

10. Beschichtungszusammensetzung nach Anspruch 1 mit einem Gehalt an leichtflüchtigen organischen Verbindungen (VOC) von weniger als 263,3 kg/m³ (2,2 Pounds pro Gallone).

11. Beschichtungszusammensetzung nach Anspruch 1 mit einem Gehalt an leichtflüchtigen organischen Verbindungen (VOC) von weniger als 119,8 kg/m³ (1,0 Pounds pro Gallone).

12. Verfahren zur Herstellung von pigment-, füllstoffoder streckmittelhaltigen Aldimin- und Isocyanatzusammensetzungen, bei dem man das Pigment bzw. die Pigmente, den Füllstoff bzw. die Füllstoffe oder das Streckmittel bzw. die Streckmittel in einem Aldimin mit der Struktur 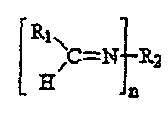 worin
n im Durchschnitt größer 1 ist,
R₁ für eine Alkylgruppe, eine Arylgruppe, eine cycloaliphatische Gruppe oder eine substituierte Alkylgruppe, Arylgruppe, cycloaliphatische Gruppe oder heterocyclische Gruppe steht und
R₂ für eine monomere oder polymere aliphatische, aromatische, arylaliphatische oder cycloaliphatische Gruppe, die O, N, S oder Si enthalten kann, steht,
vordispergiert und gegebenenfalls andere codispergierende Bindemittel oder gegebenenfalls Pigmentdispergiermittel oder gegebenenfalls Lösungsmittel verwendet, mit der Maßgabe, daß die Zusammensetzung kein hydroxylfunktionelles Harz und ein sek.-aminfunktionelles reaktives Verdünnungsmittel enthält.

13. Verfahren nach Anspruch 12, bei dem man die gewünschte Feuchtigkeitsmenge in der Dispersion zurückhält und gegebenenfalls saure und zinnorganische Verbindungen zur Erzielung von Beschichtungseigenschaften im isocyanatgehärteten System verwendet.

14. Aldimin mit der Struktur 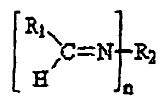 worin
n gleich 2 ist,
R₁ für Benzyl steht und R₂ für 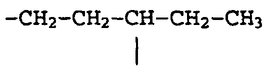 steht.

15. Aldimin mit der Struktur 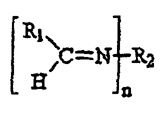 worin
n gleich 3 ist,
R₁ für eine Mischung aromatischer und aliphatischer Gruppen steht und
R₂ aliphatisch ist.

16. Aldimin nach Anspruch 15, wobei R₁ für eine Mischung von Benzyl- und Isobutylgruppen steht und R₂ für 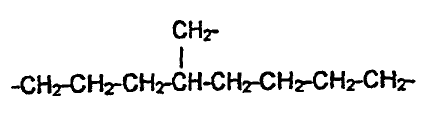 steht.

17. Beschichtungszusammensetzung, die keine hydroxylfunktionellen Harze enthält und
a) eine Pigmentkonzentratzusammensetzung mit dispergiertem Pigment, enthaltend
a) ein Aldimin mit der Struktur 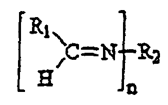 worin
n im Durchschnitt größer 1 ist,
R₁ für eine Alkylgruppe, eine Arylgruppe, eine cycloaliphatische Gruppe oder eine substituierte Alkylgruppe, Arylgruppe, cycloaliphatische Gruppe oder heterocyclische Gruppe steht und
R₂ für eine monomere oder polymere aliphatische, aromatische, arylaliphatische oder cycloaliphatische Gruppe, die O, N, S oder Si enthalten kann, steht, und
b) mindestens ein Pigment, mindestens einen Füllstoff oder mindestens ein Streckmittel,
wobei das Pigment bzw. die Pigmente, der Füllstoff bzw. die Füllstoffe oder das Streckmittel bzw. die Streckmittel in der Aldiminverbindung vordispergiert sind und gegebenenfalls andere codispergierende Bindemittel oder gegebenenfalls Netzmittel oder gegebenenfalls Lösungsmittel verwendet werden, und
b) ein unreaktives filmbildendes Auflackharz enthält.

18. Beschichtungszusammensetzung nach Anspruch 17, worin es sich bei b) um lufttrockenenden Lack oder Polyester/Celluloseacetobutyrat (CAB) handelt.

19. Beschichtungszusammensetzung, die keine hydroxylfunktionellen Harze enthält und
a) eine eine Pigmentkonzentratzusammensetzung mit dispergiertem Pigment, enthaltend
a) ein Aldimin mit der Struktur 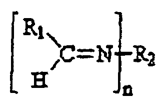 worin
n im Durchschnitt größer 1 ist,
R₁ für eine Alkylgruppe, eine Arylgruppe, eine cycloaliphatische Gruppe oder eine substituierte Alkylgruppe, Arylgruppe, cycloaliphatische Gruppe oder heterocyclische Gruppe steht und
R₂ für eine monomere oder polymere aliphatische, aromatische, arylaliphatische oder cycloaliphatische Gruppe, die O, N, S oder Si enthalten kann, steht, und
b) mindestens ein Pigment, mindestens einen Füllstoff oder mindestens ein Streckmittel,
wobei das Pigment bzw. die Pigmente, der Füllstoff bzw. die Füllstoffe oder das Streckmittel bzw. die Streckmittel in der Aldiminverbindung vordispergiert sind, und gegebenenfalls andere codispergierende Bindemittel oder gegebenenfalls Netzmittel oder gegebenenfalls Lösungsmittel verwendet werden, und
b) ein gegenüber Aldimin unreaktives filmbildendes Auflackharz und
c) gegebenenfalls eine mitreagierende Härterkomponente
enthält.

20. Beschichtungszusammensetzung nach Anspruch 19, worin b) iminfunktionelle Harze, aminfunktionelle Harze, hydroxylfunktionelle Harze, carbonsäurefunktionelle Harze, anhydridfunktionelle Harze, carbodiimidfunktionelle Harze, epoxidfunktionelle Harze, blockierte isocyanatfunktionelle Harze, Alkydeinbrennharze oder Acryleinbrennharze enthält.

21. Beschichtungszusammensetzung nach Anspruch 19, worin b) epoxidfunktionelle Harze, carbonsäurefunktionelle Harze, anhydridfunktionelle Harze, carbodiimidfunktionelle Harze, hydroxylfunktionelle Harze oder blockierte isocyanatfunktionelle Harze enthält.

## Revendications

1. Composition de revêtement ne contenant pas de résines à fonction hydroxy et comprenant :
a) une aldimine de structure 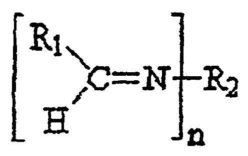 dans laquelle
n est en moyenne supérieur à 1,
R₁ est un groupe alkyle, aryle, alkyle cycloaliphatique ou substitué, aryle, cycloaliphatique ou hétérocyclique, et
R₂ est un groupe aliphatique, aromatique, arylaliphatique ou cycloaliphatique, monomère ou polymère, pouvant renfermer O, N, S ou Si,
b) un composant à fonction isocyanate,
c) au moins un pigment, une charge ou une matière de remplissage et
d) un diluant réactif à fonction aminé secondaire
dans laquelle le(les) pigment(s), la(les) charge(s) ou la(les) matière(s) de remplissage sont prédispersés dans le composé aldimine et éventuellement d'autres véhicules de co-dispersion ou éventuellement des agents mouillants de pigments ou éventuellement des solvants sont utilisés.

2. Composition de revêtement selon la revendication 1, dans laquelle le composant à fonction isocyanate comprend un groupe choisi parmi des isocyanurates aliphatiques, aromatiques ou cycloaliphatiques, des biurets, des oxadiazènetriones ou des prépolymères à fonction isocyanate.

3. Composition de revêtement selon la revendication 1, dans laquelle le composant à fonction isocyanate comprend une uretdione aliphatique, aromatique ou cycloaliphatique.

4. Composition de revêtement selon la revendication 1, dans laquelle le composant à fonction isocyanate comprend un allophanate aliphatique, aromatique ou cycloaliphatique.

5. Composition de revêtement selon la revendication 1, ladite composition étant durcie pour produire une sous-couche.

6. Composition de revêtement selon la revendication 1, ladite composition étant durcie pour produire une couche de finition.

7. Composition de revêtement selon la revendication 1, ladite composition étant durcie pour produire une couche de fond.

8. Substrat revêtu préparé par revêtement d'un substrat avec la composition de revêtement selon la revendication 1 et par durcissement dudit revêtement.

9. Composition de revêtement selon la revendication 1, dans laquelle la teneur en composés organiques volatils (COV) est inférieure à 335,5 kg/m³ (2,8 livres par gallon).

10. Composition de revêtement selon la revendication 1, dans laquelle la teneur en composés organiques volatils (COV) est inférieure à 263,3 kg/m³ (2,2 livres par gallon).

11. Composition de revêtement selon la revendication 1, dans laquelle la teneur en composés organiques volatils (COV) est inférieure à 119,8 kg/m³ (1,0 livres par gallon).

12. Procédé de préparation de compositions d'aldimines et d'isocyanates contenant des pigments, des charges ou des matières de remplissage, dans lequel le(les) pigment(s), la(les) charge(s) ou la(les) matière(s) de remplissage sont prédispersés dans une aldimine de structure 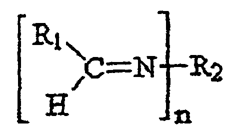 dans laquelle
n est en moyenne supérieur à 1,
R₁ est un groupe alkyle, aryle, alkyle cycloaliphatique ou substitué, aryle, cycloaliphatique ou hétérocyclique, et
R₂ est un groupe aliphatique, aromatique, arylaliphatique ou cycloaliphatique, monomère ou polymère, pouvant renfermer O, N, S ou Si,
et éventuellement d'autres véhicules de co-dispersion ou éventuellement des agents dispersants de pigments ou éventuellement des solvants sont utilisés, à condition que la composition ne contienne pas de résine à fonction hydroxy, et un diluant réactif à fonction aminé secondaire.

13. Méthode selon le procédé de la revendication 12, dans laquelle la quantité souhaitée d'humidité dans la dispersion est retenue, et des composés acides et organoétain sont éventuellement utilisés pour produire des propriétés de revêtement dans un système durci par isocyanate.

14. Aldimine de structure 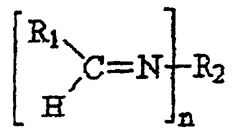 dans laquelle
n vaut 2
R₁ est un benzyle
R₂ est -CH₂-CH₂-CH-CH₂-CH₃.

15. Aldimine de structure 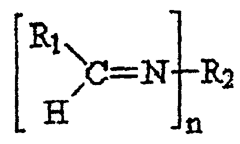 dans laquelle
n vaut 3
R₁ est un mélange de groupes aromatiques et aliphatiques,
R₂ est aliphatique.

16. Aldimine selon la revendication 15, dans laquelle R₁ est un mélange de groupes benzyle et isobutyle et R₂ est :

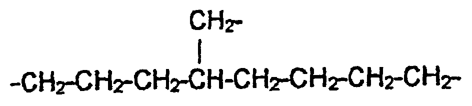

17. Composition de revêtement ne renfermant pas de résines à fonction hydroxy et comprenant :
a) une composition concentrée de pigment dispersé comprenant :
a) une aldimine de structure 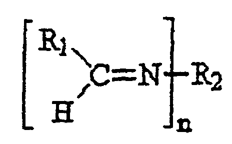 dans laquelle
n est en moyenne supérieur à 1,
R₁ est un groupe alkyle, aryle, alkyle cycloaliphatique ou substitué, aryle, cycloaliphatique ou hétérocyclique, et
R₂ est un groupe aliphatique, aromatique, arylaliphatique ou cycloaliphatique, monomère ou polymère, pouvant renfermer O, N, S ou Si,
b) au moins un pigment, une charge ou une matière de remplissage,
dans laquelle le(les) pigment(s), la(les) charge(s) ou la(les) matière(s) de remplissage sont prédispersés dans le composé aldimine et éventuellement d'autres véhicules de co-dispersion ou éventuellement des agents mouillants ou éventuellement des solvants sont utilisés,
b) une résine diluée filmogène non réactive.

18. Composition de revêtement selon la revendication 17, dans laquelle b) est un vernis ou un polyester/ acétobutyrate de cellulose (CAB).

19. Composition de revêtement ne renfermant pas de résines à fonction hydroxy et comprenant :
a) une composition concentrée de pigment dispersé comprenant :
a) une aldimine de structure 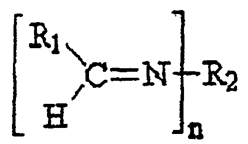 dans laquelle
n est en moyenne supérieur à 1,
R₁ est un groupe alkyle, aryle, alkyle cycloaliphatique ou substitué, aryle, cycloaliphatique ou hétérocyclique, et
R₂ est un groupe aliphatique, aromatique, arylaliphatique ou cycloaliphatique, monomère ou polymère, pouvant renfermer O, N, S ou Si,
b) au moins un pigment, une charge ou une matière de remplissage,
dans laquelle le(les) pigment(s), la(les) charge(s) ou la(les) matière(s) de remplissage sont prédispersés dans le composé aldimine et éventuellement d'autres véhicules de co-dispersion ou éventuellement des agents mouillants ou éventuellement des solvants sont utilisés,
b) une résine diluée non réactive vis-à-vis d'une aldimine,
c) éventuellement un composant durcissant co-réactif.

20. Composition de revêtement selon la revendication 19, dans laquelle b) comprend des résines imine, aminé, hydroxy, acide carboxylique, anhydride, carbodiimide, époxy, émail alkyde, émail acrylique ou à fonction isocyanate bloquée.

21. Composition de revêtement selon la revendication 19, dans laquelle b) comprend des résines époxy, acide carboxylique, anhydride, carbodiimide, aminé, hydroxy ou à fonction isocyanate bloquée.
